# EUROPEAN PATENT APPLICATION

(11) **EP 4 429 071 A1**
(43) Date of publication of application: **11.09.2024**
(21) Application number: 23305323.0
(22) Date of filing: 10.03.2023
(51) Int. Cl.: H02J 50/00, H02J 50/12, H02J 50/40, H02J 50/80, H02J 50/90, H04B 5/00, H04B 17/318

(54) **WIRELESS POWER TRANSMISSION BETWEEN A POWER TRANSMITTER AND AN APPLIANCE**

(71) Applicant: STMicroelectronics International N.V., 1228 Plan-les-Ouates, Geneva (CH)
(72) Inventor: RAMPETSREITER, Martin, 8054 GRAZ (AT); WUTTE, Rene, 8151 SANKT BARTHOLOMA (AT); HUSKIC, Asmira, 8010 GRAZ (AT); DENDA, Martin, 8041 GRAZ (AT)
(74) Representative: Cabinet Beaumont

(57) **Abstract**

The present disclosure relates to a wireless power receiving appliance (12) adapted to wirelessly receive power from a wireless power transmitter (11), the appliance (12) comprising:
- an NFC device (140) adapted to be electromagnetically coupled to another NFC device (130) of the wireless power transmitter;
- a field strength indicator (145) adapted to:
receive from at least an NFC antenna (141) of the NFC device, a representative signal (V_{SUP}) of the strength of the NFC field between the NFC device (140) and the other NFC device (130),
compare a value of the representative signal with at least one reference value, and
emit a user signal depending on the comparison between the value of the representative signal and the at least one reference value;

the user signal displaying an indication of the position of the appliance with respect to the wireless power transmitter.

## Description

### Technical field

The present disclosure relates generally to the field of wireless power transmission, and in particular to wireless power transmission between a power transmitter, such as a kitchen hob, and an appliance, such as a kitchen appliance, for example according to the Ki Cordless Kitchen standard.

### Background art

Wireless power transfer (WPT) or wireless power transmission, is used for various applications. One technique of wireless power transmission uses inductive coupling between a power transmitter and a power receiver, for example a resonant inductive coupling. For example, a power transmitter, connected to a power source, converts electrical current into an alternating electromagnetic field through a first induction coil, and sends it to a power receiver. The power receiver comprises a second induction coil electromagnetically coupled to the first induction coil, and the electromagnetic field formed by the first induction coil induces an alternating current (AC) in the second induction coil. The induced alternating current may directly drive (supply) a load, or may drive a load with a direct current (DC) voltage generated by a rectifier in the power receiver. According to a resonant inductive coupling technique, each of the power transmitter and the power receiver comprises a resonant circuit (or oscillating circuit, or resonant tank), which may consist of a capacitor connected to the inductive coil, or a self-resonant coil, and the oscillating circuits of the power transmitter and the power receiver are tuned to resonate at the same resonant frequency.

One emerging standard is the "Ki Cordless Kitchen standard" ("Ki standard") developed by the Wireless Power Consortium (WPC), which is dedicated to the wireless transmission of power to cordless kitchen appliances, such as rice cookers, toaster, blenders, coffee makers, kettles, fryers and the like.

In some applications, a wireless communication is required between the power transmitter and the power receiver, for example to initialize the power transfer and/or to adjust the supplied power level during the power transmission.

According to the Ki standard, communication between the power transmitter, such as a kitchen hob, and the appliance, such as a kitchen appliance, is typically based on a Near-Field Communication (NFC) technology.

Near-Field communication technology typically uses a radiofrequency electromagnetic field, also called "carrier field", typically at 13.56 MHz, generated by a first NFC device to detect, and communicate with, a second NFC device within range. Depending on the application, for a communication, one of the first and second NFC devices operates in so-called reader mode, while the other of the first and second NFC devices operates in so-called card mode, or both the first and second NFC devices communicate in peer-to-peer (P2P) mode.

The carrier field may also be used to wirelessly supply a relatively limited amount of power, for example of up to 3 W, to the second NFC device, when the first and second NFC devices are adapted to power transfer via NFC. However, this limited power is not sufficient to supply certain appliances, notably kitchen appliances, which require a relatively high power to be transmitted, for example up to about 2.5 kW, for example from the kitchen hob.

For example, for wireless power transmission to a kitchen appliance, the first NFC device forms part of the wireless power transmitter, such as a kitchen hob, and the second NFC device forms part of the kitchen appliance, acting as a wireless power receiver.

It has been proposed to incorporate the wireless power transmitter under a flat work surface, thereby facilitating cleaning. However, a difficulty is that, in the absence of a mechanical positioning mechanism for centering the appliance with respect to the wireless power transmitter, the power transmission may be degraded.

### Summary of Invention

There is a need for improving wireless power transmission between a wireless power transmitter and an appliance acting as a wireless power receiver. In particular, there is a need for improving the positioning of the appliance with reference to the power transmitter, for example to maximize the transmitted power.

One embodiment provides a wireless power receiving appliance adapted to wirelessly receive power from a wireless power transmitter, the appliance comprising:
- an NFC device adapted to be electromagnetically coupled to another NFC device of the wireless power transmitter;
- a field strength indicator adapted to:
   receive from at least an NFC antenna of the NFC device, a representative signal of the strength of the NFC field between the NFC device and the other NFC device,
   compare a value of the representative signal with at least one reference value, and
   emit a user signal depending on the comparison between the value of the representative signal and the at least one reference value;
   the user signal displaying an indication of the position of the appliance with respect to the wireless power transmitter.

In an embodiment, the representative signal received by the field strength indicator is a DC signal, for example a DC voltage, the NFC device comprising an inverter coupled to the at least one NFC antenna and to the field strength indicator, the inverter being adapted to convert an AC signal received from the at least one NFC antenna into the DC signal.

In an embodiment, the NFC device comprises an NFC harvester including the inverter, and a matching network coupled to the at least one NFC antenna and to the NFC harvester, the AC signal being transmitted by the matching network to the inverter, the NFC harvester and the matching network being for example included in a matching network and harvester unit.

In an embodiment, the at least one NFC antenna comprises a plurality of NFC antennas, each coupled to the field strength indicator, for example through a multiplexer.

In an embodiment, each NFC antenna is coupled to the inverter, for example through a multiplexer.

In an embodiment, the field strength indicator comprises:
- at least a comparator adapted to compare the value of the representative signal with the at least one reference value; and
- a signal emitter unit coupled to the at least one comparator and adapted to emit the user signal, for example if the value of the representative signal is greater than, or equal to, the at least one reference value.

In an embodiment, the at least one comparator comprises a plurality of comparators, and the at least one reference value comprises different reference values, each comparator being adapted to compare the value of the representative signal with one reference value of the different reference values;
the user signal emitted by the signal emitter unit depending on the comparison between the value of the representative signal and the reference value of each comparator, for example whether the value of the representative signal is greater than, or equal to, one or more of the different reference values.

In an embodiment, the different reference values are ordered in increasing values between a low reference value and a high reference value, or in decreasing values between a high reference value and a low reference value.

In an embodiment, the signal emitter unit comprises one signal emitter, for example one light source, coupled, for example connected, to the at least one comparator.

In an embodiment, the signal emitter unit comprises a plurality of signal emitters, each comparator being coupled, for example connected, to a dedicated signal emitter.

In an embodiment, some of the signal emitters are adapted to indicate a direction of moving of the appliance in order to improve the position of the appliance with respect to the wireless power transmitter.

In an embodiment, the NFC antennas are each coupled to a dedicated signal emitter among the signal emitters adapted to indicate the direction, the dedicated signal emitters being adapted to indicate a direction of moving of the appliance towards one of the NFC antennas or between two adjacent NFC antennas.

In an embodiment, the at least one signal emitter comprises at least a light source, for example at least a LED, and the user signal is a light signal having a characteristic, for example a brightness and/or a color, which depends on the comparison between the value of the representative signal and the at least one reference value.

In an embodiment, the at least one NFC antenna of the NFC device is adapted to be electromagnetically coupled to another NFC antenna of the other NFC device.

In an embodiment, the wireless power receiving appliance further comprises a power receiver circuit adapted to receive power from a power transmitter circuit of the wireless power transmitter.

In an embodiment, the wireless power receiving appliance is a kitchen appliance, for example is adapted to receive power from the wireless power transmitter according to the Ki Cordless Kitchen standard.

One embodiment provides a method for wirelessly power transmission between a wireless power transmitter and a wireless power receiving appliance, said appliance comprising an NFC device adapted to be electromagnetically coupled to another NFC device of the wireless power transmitter, the method comprising:
- receiving from at least an NFC antenna of the NFC device, a representative signal of the strength of the NFC field between the NFC device and the other NFC device,
- comparing a value of the representative signal with at least one reference value, and
- emitting a user signal depending on the comparison between the value of the representative signal and the at least one reference value;
the user signal displaying an indication of the position of the appliance with respect to the wireless power transmitter.

In an embodiment, the method further comprises:
- moving the wireless power receiving appliance in a first direction;
- determining if the value of the representative signal increases or decreases during, or after, the moving, and:
   if the value increases, then continuing moving said appliance in the first direction until the representative signal stops increasing or reaches a threshold value; or
   if the value decreases, then moving said appliance in a second direction different than, for example opposite or perpendicular to, the first direction, and repeating the determining step until the representative signal stops increasing or is above a threshold value.

### Brief description of drawings

The foregoing features and advantages, as well as others, will be described in detail in the following description of specific embodiments given by way of illustration and not limitation with reference to the accompanying drawings, in which:
Figure 1 schematically illustrates, in the form of blocks, a wireless power transmission system comprising a wireless power receiving appliance according to an embodiment;
Figure 2 schematically illustrates an example of circuits of an NFC device in a wireless power receiving appliance according to an embodiment;
Figure 3 schematically illustrates an example of a field strength indicator in a wireless power receiving appliance according to an embodiment; and
Figure 4A and figure 4B illustrate other examples of circuits of an NFC device in a wireless power receiving appliance according to an embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the Near-Field communication protocols and the usual electronic devices or circuits implementing these protocols have not been described, these protocols being well-known by one skilled in the art and being compatible with the described embodiments.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

In the following disclosure, when reference is made to a "power transmitter" or a "transmitter", it designates a wireless power transmitter. Similarly, when reference is made to a "power receiver" or a "receiver" or an "appliance", it designates a wireless power receiving appliance, and when reference is made to a "power transmission system", it designates a wireless power transmission system.

In the following disclosure, when reference is made to an NFC device, it designates an electronic device incorporating one or several Near-Field communication (NFC) circuits. The Near-Field communication circuits each have various elements or electronic circuits for generating or detecting a radiofrequency signal using an NFC antenna, and/or modulation or demodulation circuits. Each NFC antenna may comprise, or be part of, an oscillating circuit.

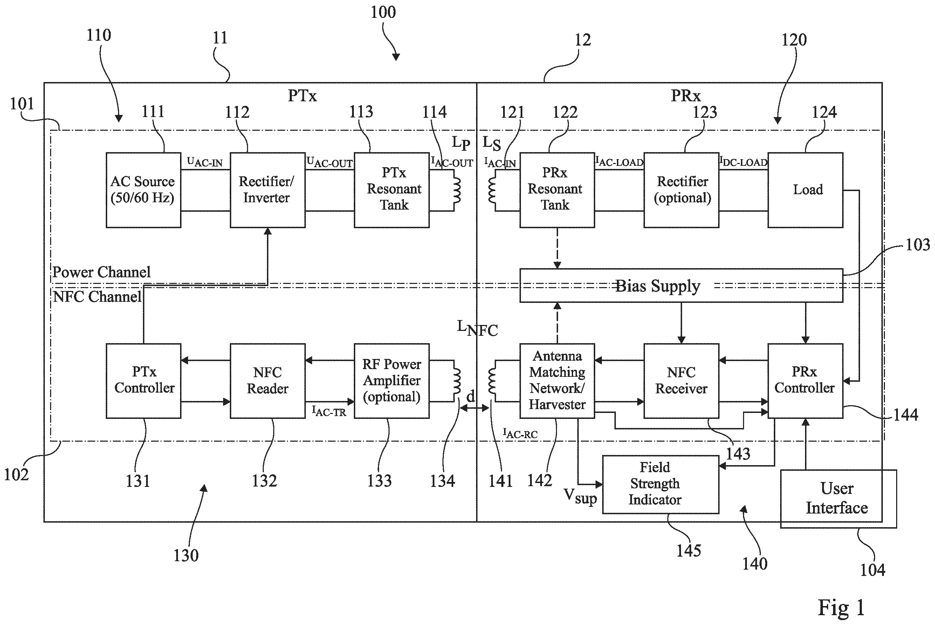

Figure 1 schematically illustrates, in the form of blocks, a wireless power transmission system 100 comprising a wireless power receiving appliance 12 according to an embodiment.

The wireless power transmission system 100 is adapted to transfer power from a power transmitter 11, for example a kitchen hob, to an appliance, such as a kitchen appliance, acting as a power receiver 12, using Near-Field communications for controlling the power transfer. The wireless power transmission system 100 includes a power transmission channel 101 (Power Channel) and a Near-Field communication channel 102 (NFC Channel), which may also function as an auxiliary/intermediate power transmission channel for relatively low power levels. The wireless power transmission system 100 may also include a bias supply 103, which may receive part of the transmitter power, and use it to generate a biasing voltage for other circuit elements, as described hereafter.

The power transmitter 11 (PTx) comprises, or is coupled to, a power transmitter circuit 110, in the power transmission channel 101, and a first NFC device 130, in the NFC channel 102.

The power receiver 12 (PRx) comprises, or is coupled to, a power receiver circuit 120, in the power transmission channel 101, and a second NFC device 140, in the NFC channel 102.

The power transmitter 11 and the power receiver 12 are separated by a distance d.

The power transmitter circuit 110 comprises:
- a power source 111 (AC Source) adapted to supply an input power, represented as an input AC (Alternating Current) voltage U_{AC-IN} (for example 230V at 50 Hz);
- a rectifier/inverter unit 112 (Rectifier/Inverter) coupled, for example connected, to the power source 111 and adapted to convert the input AC voltage U_{AC-IN} into an output AC voltage U_{AC-OUT} having a different amplitude and frequency from that of the input AC voltage U_{AC-IN} (for example about 200V at about 300kHz); and
- a first oscillating circuit 113 (PTx Resonant Tank) coupled, for example connected, to the rectifier/inverter unit 112, and adapted to apply the output AC voltage U_{AC-OUT} to a first inductive antenna 114 (L_{P}), resulting in the generation of an alternating current I_{AC-OUT} in the first inductive antenna 114;
- the first inductive antenna 114 (L_{P}), schematically represented as a first induction coil, coupled, for example connected, to the first oscillating circuit 113.

The first inductive antenna 114 may be included in the first oscillating circuit 113.

The power receiver circuit 120 comprises:
- a second inductive antenna 121 (L_{S}), schematically represented as a second induction coil, adapted to be electromagnetically coupled to the first inductive antenna 114 in order to induce an alternating current I_{AC-IN} in the second inductive antenna 121;
- a second oscillating circuit 122 (PRx Resonant Tank), coupled, for example connected, to the second inductive antenna 121, and adapted to transform the alternating current I_{AC-IN} into an alternating load current I_{AC-LOAD};
- an optional rectifier 123 (Rectifier) coupled, for example connected, to the second oscillating circuit 122 and adapted to convert the alternating load current I_{AC-LOAD} into a direct load current I_{DC-LOAD} and
- a load 124 (Load), coupled, for example connected, to the second oscillating circuit 122, or to the optional rectifier 123.

At least part of the alternating load current I_{AC-LOAD} may also be directed to the bias supply 103.

The second inductive antenna 121 may be included in the second oscillating circuit 122.

The first NFC device 130, which for example implements an NFC reader, comprises:
- a first control unit 131 (PTx Controller);
- a first NFC unit 132 (NFC Reader) coupled, for example connected, to the first control unit 131;
- an optional amplifier 133 (RF Power Amplifier) coupled, for example connected, to the first NFC unit 132; and
- a first NFC antenna 134, schematically represented as a coil, coupled, for example connected, to the amplifier 133 or to the first NFC unit 132.

The first NFC antenna 134 may comprise at least one inductive coil or element, for example in the form of a patch antenna or a microstrip antenna. The at least one inductive coil or element is, for example, connected to, or comprised in, an oscillating circuit (not represented).

The first NFC unit 132 is adapted to perform operations for generating and receiving radiofrequency signals by means of the first NFC antenna 134. The first NFC unit 132 for example comprises:
- a circuit for supplying the first NFC antenna 134 with an alternating current (I_{AC-TR}) so that a corresponding radiofrequency electromagnetic field can be emitted by said first NFC antenna;
- modulating and/or demodulating circuits configured to modulate and/or demodulate a radiofrequency signal in order to send data to, and/or receive data from, the second NFC device 140, using NFC protocols.

The first control unit 131 is for example configured to implement a wireless control protocol and to transmit instructions to the first NFC unit 132. In return, the first NFC unit 132 can send a confirmation signal to the first control unit 131.

The first control unit 131 may be coupled to, or may include, an antenna matching network (not represented), which in turn may be coupled to the first NFC antenna 134, for example through the amplifier 133.

An antenna matching network, also called "matching network", is typically configured to maximize the strength of the signals that may be emitted or received using an associated antenna during Near-Field communications. A matching network generally comprises electrical components such as capacitors, whose capacitance values allow to adapt the matching network to the required target impedance of the associated antenna.

The first control unit 131 is coupled, for example connected, to the rectifier/inverter unit 112 of the power transmitter circuit 110, for example in order to control the rectifier/inverter unit 112 to start the power transfer, to change, in the output AC voltage U_{AC-OUT}, the power sent to the power receiver 12, or to stop the power transfer.

The amplifier 133 is adapted to amplify the alternating current I_{AC-TR} to be sent to the first NFC antenna 134. Indeed, to communicate with each other through the NFC channel 102, the power transmitter 11 and the power receiver 12 may be separated by up to a maximum distance d, preferably less than or equal to 43 mm, or substantially equal to 43 mm. This distance d for example corresponds to the distance separating the first NFC antenna 134 and a second NFC antenna 141 of the second NFC device 140 (described hereafter). In order to be capable of assuring Near-Field communications over the distance d of up to 43 mmm, the amplifier 133 is for example used to amplify the signal sent by the first NFC device 130 to the second NFC device 140.

The first NFC device 130 may also comprise other circuits (not represented), which are usual circuits well known to a person skilled in the art. At least some of the other circuits may be included in the first control unit 131 and/or in the first NFC unit 132.

The second NFC device 140, which is for example configured to implement or emulate an NFC card or receiver, comprises:
- a second NFC antenna 141, schematically represented as a coil, adapted to be electromagnetically coupled to the first NFC antenna 134;
- a matching network and harvester unit 142 (Antenna Matching Network/Harvester) coupled, for example connected, to the second NFC antenna 141;
- a second NFC unit 143 (NFC Receiver) coupled, for example connected, to the matching network and harvester unit 142;
- a second control unit 144 (PRx Controller) coupled, for example connected, to the second NFC unit 143.

The second NFC antenna 141 may comprise at least one inductive coil or element, for example in the form of a patch antenna or a microstrip antenna. The at least one inductive coil or element is, for example, connected to, or comprised in, an oscillating circuit (not represented).

The second NFC unit 143 is for example configured to manage Near-Field communications. For example, the second NFC unit 143 comprises demodulating and/or modulating circuits configured to demodulate and/or modulate a radiofrequency signal in order to receive data from, and/or send data to, the first NFC device 130, using NFC protocols.

The second control unit 144 is for example configured to transmit instructions to the second NFC unit 143. In return, the second NFC unit 143 may send information to the second control unit 144.

The system 100 further comprises a user interface 104 coupled to, or included in, the second control unit 144. The user interface 104 may be used for the user to transmit instructions to the second control unit 144. For example, the user interface 104 comprises button(s) or rotary knob(s) to turn on/off the appliance 12, and/or LED(s) for visual feedback, a speaker for acoustic feedback, displays.

The matching network of the unit 142 is adapted to have impedance characteristics that match and/or are compatible with the electrical properties of the second NFC antenna 141 in order to maximize electromagnetic coupling between the NFC antennas, and thus the strength of the signals that may be emitted and received using the first and second NFC antenna during Near-Field communications.

The first NFC device 130 and the second NFC device 140 may also be configured to power transfer via NFC at relatively low power levels, for example power of from about 200 mW to about 3W. For example, the NFC channel 102 may function as an auxiliary, or intermediate, power transmission channel.

The NFC harvester of the unit 142 is adapted to harvest power from the first NFC device 130 via the second NFC antenna 141.

The second NFC device 140 may be configured to receive an alternating current I_{AC-RC} induced by the first NFC antenna 134 in the second NFC antenna 141. For example, at least part of the alternating current I_{AC-RC} may be directed to the bias supply 103.

The bias supply 103 may be adapted to power at least the second NFC unit 143, the second control unit 144, and/or even the user interface 104.

The second NFC device 140 may also comprise other circuits (not represented), which are usual circuits well known to a person skilled in the art. At least some of the other circuits may be included in the second control unit 144 and/or in the second NFC unit 143.

The power receiver circuit 120 is coupled, for example connected, to the second NFC device 140, for example in order to send information about the state of the load 124 of the power receiver circuit 120 to the second control unit 144.

One issue which is to be addressed in a wireless power transmission to an appliance is that the power receiver 12 (e.g. the kitchen appliance) is preferably centered with respect to the power transmitter 11, such as a kitchen hob, in order to achieve a strong electromagnetic coupling between the antennas, and thus avoid losses. For example, the power receiver antenna (second inductive antenna 121) is preferably centered, or aligned, with the power transmitter antenna (first inductive antenna 114). The alignment tolerance for establishing Near-Field communications between the appliance 12 and the power transmitter 11, and for permitting a minimum level of power transfer, is for example of ± 40 mm in the planar directions of the first inductive antenna. When the alignment is correct, a LED may signal that Near-Field communications are established, before the power transfer starts. But even within this alignment tolerance, the position of the appliance may not correspond to the optimal alignment of the appliance with respect to the power transmitter, wherein the optimal alignment maximizes the electromagnetic coupling between the power transmitter antenna and the power receiver antenna, and thus, the power transfer to the appliance.

However, it is difficult for a user to align the appliance with respect to the power transmitter. Indeed, even if some visual indicators are marked on the surface containing the power transmitter, these may be hidden by the appliance when it is placed on the surface. Furthermore, in some cases, it may be desirable for aesthetic reasons not to include such visual markings. Therefore, the user may lack visibility to correctly align the respective centers of the antennas.

In order to increase the alignment precision of the appliance with respect to the power transmitter, the embodiments provide a field strength indicator 145 in the appliance 12 to display an indication of the strength of the NFC field between the first and second NFC devices, the NFC field strength depending on the position of the appliance 12 with respect to the power transmitter 11. The field strength indicator 145 uses a representative signal supplied by the second NFC device 140, for example a current or a voltage, which is representative of the field strength received by the second NFC device.

Preferably, the field strength indicator 145 is included in the second NFC device 140. The field strength indicator 145 is preferably coupled to the matching network and harvester unit 142. Alternately, the field strength indicator 145 may be coupled to, without being necessary included in, the second NFC device 140.

In a variant, the field strength indicator 145 may be coupled to the matching network and harvester unit 142 via the second control unit 144.

In another variant, the matching network and harvester unit 142 may be coupled to the second control unit 144, and the field strength indicator 145 may be included in the second control unit 144.

Preferably, the second NFC antenna 141 may be placed near, for example below or above, circumscribed in or surrounding, the second inductive antenna 121, so that the position of the second NFC antenna is representative of the position of the second inductive antenna.

The first NFC antenna 134 may also be placed near, for example below or above, circumscribed in or surrounding, the first inductive antenna 114.

The representative signal may be sent to the field strength indicator 145 by the second NFC antenna 141, for example through the matching network and harvester unit 142, and/or through the matching network and harvester unit 142 and the second control unit 144.

For example, the matching network and harvester unit 142 is configured to receive from the second NFC antenna 141 an AC signal, to convert it into a DC voltage V_{SUP} which is sent to the field strength indicator 145, and/or to the second control unit 144, and the field strength indicator 145 is configured to compare a value of the DC voltage V_{SUP} to at least one reference signal, for example a reference DC voltage. The second control unit 144 may also be adapted to drive one or more signal emitters, for example some light emitters like LEDs, and/or sound emitters.

Therefore, the strength of the NFC field between the appliance and the power transmitter is determined using a representative signal from the NFC device of the appliance. Comparing a value of the representative signal with at least a reference value, the user can know if the appliance is well centered with respect to the power transmitter. In addition, the user can move the appliance relative to the power transmitter, and determine if the strength of the NFC field increase or decrease, thanks to the variations of the representative signal, and thus if the appliance is more or less centered with respect to the power transmitter. For example, the user can move the appliance relative to the power transmitter until the strength of the NFC field is at a desired value, or at a maximum, corresponding to a configuration in which the appliance and the power transmitter are well aligned.

For example, the reference value is greater than 5V. For example, the reference value is lower than or equal to 15V. For example, there are a plurality of reference values, which can correspond to intermediate and gradual values between a low reference value and a high reference value, such as between 5 and 15V.

For example, the field strength indicator 145 comprises at least a light emitter, or light source, such as a LED, and/or at least a sound emitter or any other signal emitter adapted to transmit a user signal, that is, a signal to a user.

In the example of a sound emitter, the user signal is a sound signal, and the emitted sound signal may increase, or decrease, depending on the difference between the value of the representative signal and the at least one reference value.

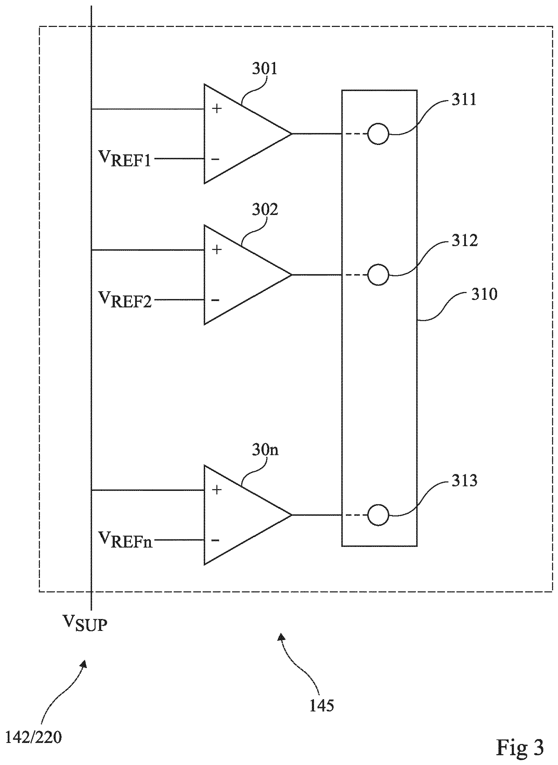

In the example of a light source, such as a LED, the user signal is a light signal, and the brightness and/or the color, or any other characteristic, of the emitted light signal may change depending on the difference between the value of the representative signal and the at least one reference value. An example is given in more detail hereafter, in relation with figure 3.

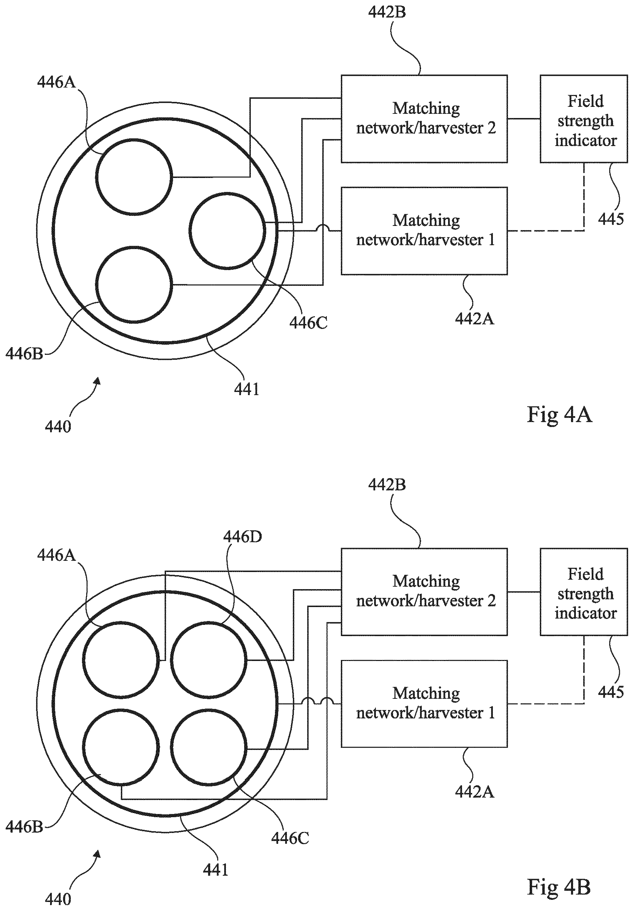

The field strength indicator 145 may comprise a plurality of signal emitters, such as a plurality of light sources, adapted to emit a plurality of user signals. For example, the user signals may represent different directions making it possible to indicate to a user the direction in which to move the appliance in order to improve its alignment with respect to the power transmitter. An example is given in more detail hereafter, in relation with figures 4A and 4B.

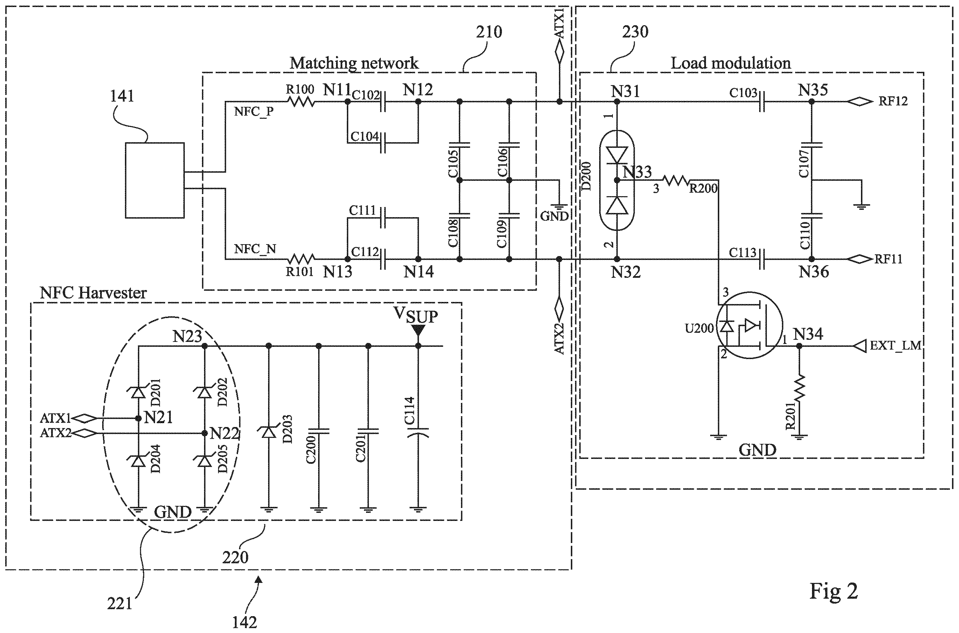

Figure 2 schematically illustrates an example of circuits of an NFC device in a wireless power receiving appliance according to an embodiment. The NFC device of figure 2 is for example similar to the second NFC device 140 of figure 1. The wireless power receiving appliance is for example similar to the power receiver 12 of figure 1.

The circuits detailed in figure 2 comprise:
- a matching network 210 (Matching network), which is coupled to an NFC antenna similar to the second NFC antenna 141 of figure 1;
- an NFC harvester 220 (NFC Harvester), which is coupled to the matching network 210 in order to receive output signals of the matching network; the NFC harvester is adapted to harvest power from the NFC antenna 141; and
- a load modulation unit 230 (Load modulation), which is coupled to output nodes of the matching network 210; the load modulation unit is adapted to modulate the impedance of the NFC antenna 141 in order to transmit NFC signals to the NFC device 130 of the power transmitter.

The matching network 210 for example comprises a first node N11 coupled to a first output NFC_P of the NFC antenna 141 via a first resistor R100, and a second node N12 coupled to the first node N11 via two capacitors of the matching network 210, a first capacitor C102 and a second capacitor C104, connected in parallel with each other. The second node N12 forms a first output node of the matching network 210 at which a first AC output signal ATX1 is present.

Similarly, the matching network 210 comprises a third node N13 coupled to a second output NFC_N of the NFC antenna 141 via a second resistor R101, and a fourth node N14 coupled to the third node N13 via two other capacitors of the matching network 210, a third capacitor C111 and a fourth capacitor C112, connected in parallel with each other. The fourth node N14 forms a second output node of the matching network 210 at which a second AC output signal ATX2 is present.

The second node N12 is coupled to a ground rail GND via two further capacitors of the matching network 210, a fifth capacitor C105 and a sixth capacitor C106, connected in parallel with each other. The fourth node N14 is coupled to the ground rail GND via two further capacitors of the matching network 210, a seventh capacitor C108 and an eighth capacitor C109, connected in parallel with each other.

The NFC harvester 220 comprises a first node N21 coupled to the first output node N12 of the matching network 210 such that it receives the first output signal ATX1, and a second node N22 coupled to the second output node N14 of the matching network 210 such that it receives the second output signal ATX2.

The first and second nodes N21, N22 form input nodes of a full bridge rectifier 221 of the NFC harvester 220. The full bridge rectifier 221 is configured to transform the AC signals ATX1, ATX2 into a DC voltage. The first node N21 is coupled to the anode of a first diode D201 of the full bridge rectifier 221, and the second node N22 is coupled to the anode of a second diode D202 of the full bridge rectifier 221. The cathodes of the first and second diodes D201, D202 are coupled to an output node N23 of the rectifier 221 supplying an output DC voltage V_{SUP}. The first node N21 is coupled to the cathode of a third diode D204 of the full bridge rectifier 221, the anode of which is coupled to the ground rail GND, and the second node N22 is coupled to the cathode of a fourth diode D205 of the full bridge rectifier 221, the anode of which is coupled to the ground rail GND.

The output node N23 of the full bridge rectifier 221 is coupled to the ground rail GND via a plurality of branches each coupled to the ground rail: a first branch including a fifth diode D203 of the NFC harvester 220, for example adapted to limit the output voltage of the NFC harvester 220 to about 15V; a second branch including a first capacitor C200 of the NFC harvester 220; a third branch including a second capacitor C201 of the NFC harvester 220; and a fourth branch including a third capacitor C114 of the NFC harvester 220. For example, the capacitors are adapted to perform a low pass filtering function and to provide a buffer during a transition from NFC power harvesting to wireless power recuperation using the power transmission channel.

The output DC voltage V_{SUP} is for example configured to provide the representative signal of the NFC field strength received by the NFC device.

The load modulator 230 comprises a first node N31 coupled to the first output node N12 of the matching network 210, and a second node N32 coupled to the second output node N14 of the matching network 210. The first and second nodes N31, N32 of the load modulator 23 are each coupled to a third node N33 via two diodes D200 of the load modulator 230, the cathodes of the diodes D200 being connected to the node N33.

The third node N33 between the two diodes D200 is coupled to the drain of a transistor U200 of the load modulator 230 via a first resistor R200. The transistor is for example an n-channel MOS (NMOS) transistor. The source of the transistor U200 is coupled to the ground rail GND, and the gate of the transistor U200 is coupled to a fourth node N34 to which is applied a signal EXT_LM. The fourth node N34 is also coupled to the ground rail GND via a second resistor R201.

The first node N31 is coupled to a fifth node N35 via a first capacitor C103 of the load modulator 230. A signal RFI2 is present at the fifth node N35. The second node N32 is coupled to a sixth node N36 via a second capacitor C113 of the load modulator 230. A signal RFI1 is present at the sixth node N36. The fifth node N35 is coupled to the ground rail GND via a third capacitor C107 of the load modulator 230, and the sixth node N36 is coupled to the ground rail GND via a fourth capacitor C110 of the load modulator 230. The signals RFI1 and RFI2 are for example differential RF signals that provide the received NFC signal of the NFC device.

The matching network 210 and the NFC harvester 220 of Figure 2 for example at least partially implement the matching network and harvester unit 142 of figure 1. The components of the load modulator 230 are for example implemented between the matching network 210 and second NFC unit 143 of figure 1.

Figure 3 schematically illustrates an example of a field strength indicator in a wireless power receiving appliance according to an embodiment. The wireless power receiving appliance is for example similar to the power receiver 12 of figure 1. The field strength indicator of figure 3 may be included in an NFC device of the wireless power receiving appliance, for example similar to the second NFC device 140 of figure 1. The field strength indicator of figure 3 may correspond to the field strength indicator 145 of figure 1.

The field strength indicator 145 may receive from the matching network and harvester unit 142, for example from the NFC harvester 220, the output DC voltage V_{SUP}, which forms a representative signal of the NFC field strength.

The field strength indicator 145 comprises a plurality of comparators 30i, where i is an integer between 1 and n, n between greater or equal to 2, which are configured to compare the DC voltage V_{SUP} each with a reference value V_{REFi} of a plurality of different reference values.

Each comparator 30i has a first input node coupled to an output node of the matching network and harvester unit 142, for example of the NFC harvester 220, such that it receives the DC voltage V_{SUP}, and a second input node coupled to a unit, for example a register (not represented), such that it receives the reference value V_{REFi}.

The reference values V_{REFi} can be ordered in increasing or decreasing values. That is, V_{REFi+1} can be smaller than V_{REFi}, or V_{REFi+1} can be greater than V_{REFi}.

As an example, V_{REF1}=6V, more generally V_{REFi}=(5+i)V, and n is equal to 10, that is V_{REF10}=15V. Or V_{REF1}=15V, more generally V_{REFi}=(16-i)V, and V_{REF10}=6V.

As another example, n is equal to 3, and V_{REF1}=10V, V_{REF2}=8V, V_{REF3}=6V, or V_{REF1}=6V, V_{REF2}=8V, V_{REF3}=10V.

Many other configurations are possible, for example depending on the desired alignment precision. For example, n may be equal to 2, or comprised between 3 and 10, or even greater than 10.

The field strength indicator 145 further comprises a signal emitter unit 310 coupled to the plurality of comparators.

The signal emitter unit 310 of Figure 3 is a light module and comprises a plurality of light sources 31i, for example of LEDs, each adapted to emit a light signal. Each comparator 30i is coupled to a dedicated light source 31i.

In a variant, the signal emitter unit 310 may be included in, or may comprise some signal emitters which are included in, a control unit of the NFC device, for example the control unit 144 of the second NFC device 140 of figure 1.

Each light source 31i may be configured to adapt the brightness of the light signal and/or to change the color of the light signal (for example from red to green), depending on the difference between the DC voltage V_{SUP} and the reference value V_{REFi} of the corresponding comparator 30i. For example, each light source 31i may be configured to increase the brightness of the light signal if the DC voltage V_{SUP} is greater than or equal to the reference value V_{REFi} of the corresponding comparator 30i.

Alternately to a plurality of light sources, the light module may comprise one light source, for example one LED, coupled to all the comparators. For example, the light source may emit a first light signal having a first brightness (for example the first brightness corresponds to a brightness when the light source is off), and/or a first color, if the DC voltage V_{SUP} is lower than all the reference values, the light source may emit a second light signal having a second brightness, and/or a second color, if the DC voltage V_{SUP} is greater than, or equal to, the smaller reference value, for example V_{REF1} or V_{REFn}, the light source may emit a third light signal having a third brightness, and/or a third color, if the DC voltage V_{SUP} of the LED is greater than or equal to at least the two smaller reference values, etc. For example, the light source may emit a light signal whose brightness gradually increases depending on whether the voltage DC voltage V_{SUP} is greater than or equal to one, two or more reference values in increasing order.

Instead of, or in addition to, one or more light source(s), the signal emitter unit could comprise one or more sound emitter(s), or any other signal emitter(s) adapted to transmit a signal to a user.

Using indications of the signal emitter unit 310, the user can move the appliance relative to the power transmitter until the field strength indicator 145 indicates that the DC voltage V_{SUP} is greater than or equal to one, two or more reference values in increasing order, depending on the desired alignment precision.

Figure 4A and 4B schematically illustrates other examples of circuits of an NFC device 440 in a wireless power receiving appliance according to an embodiment. The wireless power receiving appliance is for example similar to the power receiver 12 of figure 1, and may be comprised in the wireless power transmission system 100 of figure 1.

The NFC device 440 comprises a main NFC antenna 441 and a plurality of auxiliary NFC antennas which are distributed inside the main NFC antenna so as to be able to indicate to the user in which direction to move the appliance to better center it with respect to a power transmitter, such as the power transmitter 11 of figure 1, as explained in more detail hereafter.

Three auxiliary NFC antennas 446A, 446B, 446C are represented in figure 4A and four auxiliary NFC antennas 446A, 446B, 446C, 446D are represented in figure 4B, but the NFC device 440 may comprise two, or more, than four auxiliary NFC antennas. The more auxiliary NFC antennas, the more accurate the centering can be. Each main and auxiliary NFC antenna is adapted to be electromagnetically coupled to an NFC antenna of an NFC device comprised in the power transmitter.

The main NFC antenna 441 is coupled to a dedicated matching network and harvester unit 442A (Matching network/harvester 1). Power can be harvested from this main NFC antenna, which is also used for Near-Field communication with the NFC device of the power transmitter, as described hereabove.

The auxiliary NFC antennas 446A, 446B, 446C, 446D are adapted to be coupled to a common matching network and harvester unit 442B (Matching network/harvester 2), for example through a multiplexer (not represented), or another device adapted to select only one auxiliary NFC antenna to be coupled to the common matching network and harvester unit 442B and to isolate the other ones from the common matching network and harvester unit 442B during an operation. The auxiliary NFC antennas may not be used neither for Near-Field communication with the NFC device of the power transmitter, nor for harvesting power.

The common matching network and harvester unit 442B is coupled, for example connected, to a field strength indicator 445. The dedicated matching network and harvester unit 442A may also be coupled, or connected, to the field strength indicator 445, but not necessarily.

The common matching network and harvester unit 442B is configured to send to the field strength indicator 445 the field strength representative signal received from the selected auxiliary NFC antenna, for example the DC voltage V_{SUP} converted from the AC signal of the selected auxiliary NFC antenna. The common matching network and harvester unit 442B is for example similar to the matching network and harvester unit 142 of figure 2.

The dedicated matching network and harvester unit 442A may also be configured to send to the field strength indicator 445 a DC voltage V_{SUP} received from the main NFC antenna 441. The dedicated matching network and harvester unit 442A may also be similar to the matching network and harvester unit 142 of figure 2.

The field strength indicator 445 is for example similar to the field strength indicator 145 described in relation with figure 3. The field strength indicator 445 may comprise one or more signal emitter(s) dedicated for each auxiliary NFC antenna, for example, one (or more) light source(s) .

The field strength indicator 445 may be configured to indicate if the power transmitter is closer to one auxiliary NFC antenna than to another one. For example, the signal emitters may indicate the user in which direction to move the appliance so that the power transmitter is at about a same distance from all the auxiliary NFC antennas. The direction may be towards one of the auxiliary NFC antennas or between two adjacent auxiliary NFC antennas.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. A wireless power receiving appliance (12) adapted to wirelessly receive power from a wireless power transmitter (11), the appliance (12) comprising:
- an NFC device (140; 440) adapted to be electromagnetically coupled to another NFC device (130) of the wireless power transmitter;
- a field strength indicator (145; 445) adapted to:
receive from at least an NFC antenna (141; 446A, 446B, 446C) of the NFC device, a representative signal (V_{SUP}) of the strength of the NFC field between the NFC device (140; 440) and the other NFC device (130),
compare a value of the representative signal with at least one reference value, and
emit a user signal depending on the comparison between the value of the representative signal and the at least one reference value;
the user signal displaying an indication of the position of the appliance with respect to the wireless power transmitter.

2. The wireless power receiving appliance (12) according to claim 1, wherein the representative signal (V_{SUP}) received by the field strength indicator (145; 445) is a DC signal, for example a DC voltage, the NFC device (140; 440) comprising an inverter (221) coupled to the at least one NFC antenna (141; 446A, 446B, 446C) and to the field strength indicator, the inverter being adapted to convert an AC signal received from the at least one NFC antenna into the DC signal.

3. The wireless power receiving appliance (12) according to claim 2, wherein the NFC device (140; 440) comprises an NFC harvester (220) including the inverter (221), and a matching network (210) coupled to the at least one NFC antenna (141; 446A, 446B, 446C) and to the NFC harvester, the AC signal being transmitted by the matching network to the inverter, the NFC harvester and the matching network being for example included in a matching network and harvester unit (142; 442B).

4. The wireless power receiving appliance (12) according to any of claims 1 to 3, wherein the at least one NFC antenna comprises a plurality of NFC antennas (446A, 446B, 446C, 446D), each coupled to the field strength indicator (445), for example through a multiplexer.

5. The wireless power receiving appliance (12) according to claim 2 or 3 in combination with claim 4, wherein each NFC antenna (446A, 446B, 446C, 446D) is coupled to the inverter, for example through a multiplexer.

6. The wireless power receiving appliance (12) according to any of claims 1 to 5, wherein the field strength indicator (145; 445) comprises:
- at least a comparator (301) adapted to compare the value of the representative signal (V_{SUP}) with the at least one reference value (V_{REF1}); and
- a signal emitter unit (310) coupled to the at least one comparator (301) and adapted to emit the user signal, for example if the value of the representative signal is greater than, or equal to, the at least one reference value.

7. The wireless power receiving appliance (12) according to claim 6, wherein the at least one comparator comprises a plurality of comparators (301, 302, 30n), and the at least one reference value comprises different reference values (V_{REF1}, V_{REF2}, V_{REFn}), each comparator (30i) being adapted to compare the value of the representative signal (V_{SUP}) with one reference value (V_{REFi}) of the different reference values;
the user signal emitted by the signal emitter unit (310) depending on the comparison between the value of the representative signal (V_{SUP}) and the reference value (V_{REFi}) of each comparator (30i), for example whether the value of the representative signal is greater than, or equal to, one or more of the different reference values.

8. The wireless power receiving appliance (12) according to claim 7, wherein the different reference values (V_{REF1}, V_{REF2}, V_{REFn}) are ordered in increasing values between a low reference value and a high reference value, or in decreasing values between a high reference value and a low reference value.

9. The wireless power receiving appliance (12) according to any of claims 6 to 8, wherein the signal emitter unit (310) comprises one signal emitter, for example one light source, coupled, for example connected, to the at least one comparator.

10. The wireless power receiving appliance (12) according to claim 7 or 8, wherein the signal emitter unit (310) comprises a plurality of signal emitters (31i), each comparator (30i) being coupled, for example connected, to a dedicated signal emitter (31i).

11. The wireless power receiving appliance (12) according to claim 10, wherein some of the signal emitters are adapted to indicate a direction of moving of the appliance in order to improve the position of the appliance with respect to the wireless power transmitter (11).

12. The wireless power receiving appliance (12) according to claim 11 in combination with claim 4 or 5, wherein the NFC antennas (446A, 446B, 446C, 446D) are each coupled to a dedicated signal emitter among the signal emitters adapted to indicate the direction, the dedicated signal emitters being adapted to indicate a direction of moving of the appliance towards one of the NFC antennas or between two adjacent NFC antennas.

13. The wireless power receiving appliance (12) according to any of claims 9 to 12, wherein the at least one signal emitter comprises at least a light source, for example at least a LED, and the user signal is a light signal having a characteristic, for example a brightness and/or a color, which depends on the comparison between the value of the representative signal and the at least one reference value.

14. The wireless power receiving appliance (12) according to any of claims 1 to 13, wherein the at least one NFC antenna (141; 446A, 446B, 446C) of the NFC device (140; 440) is adapted to be electromagnetically coupled to another NFC antenna (134) of the other NFC device (130).

15. The wireless power receiving appliance (12) according to any of claims 1 to 14, further comprising a power receiver circuit (120) adapted to receive power from a power transmitter circuit (110) of the wireless power transmitter (11).

16. The wireless power receiving appliance (12) according to any of claims 1 to 15, wherein the wireless power receiving appliance is a kitchen appliance, for example is adapted to receive power from the wireless power transmitter (11) according to the Ki Cordless Kitchen standard.

17. A method for wirelessly power transmission between a wireless power transmitter (11) and a wireless power receiving appliance (12), said appliance comprising an NFC device (140; 440) adapted to be electromagnetically coupled to another NFC device (130) of the wireless power transmitter, the method comprising:
- receiving from at least an NFC antenna (141; 446A, 446B, 446C) of the NFC device, a representative signal (V_{SUP}) of the strength of the NFC field between the NFC device (140; 440) and the other NFC device (130),
- comparing a value of the representative signal with at least one reference value, and
- emitting a user signal depending on the comparison between the value of the representative signal and the at least one reference value;
the user signal displaying an indication of the position of the appliance with respect to the wireless power transmitter.

18. The method according to claim 17, further comprising:
- moving the wireless power receiving appliance (12) in a first direction;
- determining if the value of the representative signal increases or decreases during, or after, the moving, and:
if the value increases, then continuing moving said appliance in the first direction until the representative signal stops increasing or reaches a threshold value; or
if the value decreases, then moving said appliance in a second direction different than, for example opposite or perpendicular to, the first direction, and repeating the determining step until the representative signal stops increasing or is above a threshold value.
